# EUROPÄISCHE PATENTSCHRIFT

(11) **EP 3 296 565 B1**
(45) Veröffentlichungstag und Bekanntmachung des Hinweises auf die Patenterteilung: **30.09.2020**
(21) Anmeldenummer: 17184270.1
(22) Anmeldetag: 01.08.2017
(51) Int. Cl.: F03D 17/00, F03D 7/04

(54) **VERFAHREN UND SYSTEM ZUM ANALYSIEREN EINES ZUSTANDS EINER WINDENERGIEANLAGE**
METHOD AND SYSTEM FOR ANALYSING A STATUS OF A WIND TURBINE
PROCÉDÉ ET SYSTÈME D'ANALYSE D'UN ÉTAT D'UNE ÉOLIENNE

(30) Priorität: 14.09.2016 DE 102016011005
(43) Veröffentlichungstag der Anmeldung: 21.03.2018
(73) Patentinhaber: Senvion GmbH, 22297 Hamburg (DE)
(72) Erfinder: Mittelmeier, Niko, 22303 Hamburg (DE); Kaus, Sebastian, 20537 Hamburg (DE); Gollnick, Bert, 15517 Fürstenwalde/Spree (DE)
(74) Vertreter: Glawe, Delfs, Moll

(56) Entgegenhaltungen:
- WO-A1-2016/077997
- US-A1- 2011 313 726
- CASTELLANI FRANCESCO ET AL: "Analyzing wind turbine directional behavior: SCADA data mining techniques for efficiency and power assessment", APPLIED ENERGY, ELSEVIER SCIENCE PUBLISHERS, GB, Bd. 185, 28. Dezember 2015 (2015-12-28), Seiten 1076-1086, XP029820769, ISSN: 0306-2619, DOI: 10.1016/J.APENERGY.2015.12.049
- HANG JUN ET AL: "Fault diagnosis of wind turbine based on multi-sensors information fusion technology", IET RENEWABLE POWER GENERA, THE INSTITUTION OF ENGINEERING AND TECHNOLOGY, MICHAEL FARADAY HOUSE, SIX HILLS WAY, STEVENAGE, HERTS. SG1 2AY, UK, Bd. 8, Nr. 3, 1. April 2014 (2014-04-01), Seiten 289-298, XP006048060, ISSN: 1752-1416, DOI: 10.1049/IET-RPG.2013.0123

## Beschreibung

Die Erfindung betrifft ein Verfahren und ein System zum Analysieren eines Betriebszustands einer Windenergieanlage.

Windenergieanlagen sind allgemein so eingerichtet, dass sie bei einer bestimmten Windstärke eine bestimmte Menge an elektrischer Energie erzeugen können. Liegt die tatsächlich erzeugte elektrische Energie unterhalb des erwarteten Werts, so kann dies unterschiedliche Ursachen haben. Beispielsweise kann es sein, dass die Windenergieanlage nicht frei angeströmt wird, so dass tatsächlich nur eine geringere Windleistung zum Antrieb des Rotors zur Verfügung steht. Möglich ist aber auch, dass bestimmte Parameter der Windenergieanlage nicht richtig eingestellt sind und deswegen nicht die volle Windleistung in elektrische Leistung umgewandelt wird. Es ist nicht einfach, zwischen diesen verschiedenen Ursachen zu unterscheiden. Das Dokument WO 2016/077997 A1 offenbart ein Verfahren und ein System zur Überwachung des Betriebszustands einer Windenergieanlage, bei dem "Supervisory Control And Data Acquisition" (SCADA)-Daten sowie Windenergieanlagenberichte gesammelt und zum Trainieren eines Gesamtmodells sowie einer Mehrzahl von Individualmodellen verwendet werden, wobei den Modellen anschließend Echtzeit-SCADA Daten zugeführt werden. Das Dokument US 2011/0313726 A1 offenbart ein zustandsabhängiges Wartungssystem für Windenergieanlagen, bei dem Leistungsparameter einer Windenergieanlage und Abweichungen der Leistungsparameter von Erwartungswerten ermittelt und ausgewertet werden, um festzustellen, ob eine Wartung der Windenergieanlage erforderlich ist.

Der Erfindung liegt die Aufgabe zugrunde, ein Verfahren und ein System zum Analysieren eines Betriebszustands einer Windenergieanlage vorzustellen, der einer direkten Analyse nicht ohne weiteres zugänglich sind. Die Aufgabe wird gelöst mit den Merkmalen der unabhängigen Patentansprüche. Vorteilhafte Ausführungsformen sind in den Unteransprüchen angegeben.

Bei dem erfindungsgemäßen Verfahren werden in einer Lernphase wenigstens drei verschiedene Klassifizierungsmodelle entwickelt. In einer Arbeitsphase werden Arbeitsdaten der Windenergieanlage mit jedem der Klassifizierungsmodelle analysiert. Anhand eines Mehrheitskriteriums der Klassifizierungsmodelle wird die Windenergieanlage einer Kategorie zugeordnet.

In einer Lernphase werden erste Lerndaten für einen ersten Modellgenerator ermittelt, sodass der erste Modellgenerator ein erstes Klassifizierungsmodell errechnet. Zweite Lerndaten werden für einen zweiten Modellgenerator ermittelt, sodass der zweite Modellgenerator ein zweites Klassifizierungsmodell errechnet. Dritte Lerndaten werden für einen dritten Modellgenerator ermittelt, sodass der dritte Modellgenerator ein drittes Klassifizierungsmodell errechnet.

Die Lerndaten werden jeweils aus einer Mehrzahl von Lern-Datensätzen abgeleitet, wobei jeder Lern-Datensatz einer Windenergieanlage zugeordnet ist. Jeder Lern-Datensatz umfasst eine Kategorieinformation über die Windenergieanlage. Jeder Lern-Datensatz umfasst einen ersten Parameterwert und einen von dem ersten Parameterwert abhängigen zweiten Parameterwert. Die Ableitung der Lerndaten aus den Lern-Datensätzen erfolgt anhand eines die Abhängigkeit zwischen dem ersten Parameterwert und dem zweiten Parameterwert repräsentierenden Klassifizierungskriteriums. Außerdem wird vorzugsweise aus jedem Lern-Datensatz die Kategorieinformation in die Lerndaten übernommen.

Ein Klassifizierungsmodell beinhaltet einen Algorithmus, der Arbeitsdaten einer Windenergieanlage als Eingangsdaten einliest, analysiert und als Ausgangsdaten wenigstens eine Kategorieinformation liefert. Eine Kategorieinformation gibt an, welcher Kategorie ein Datensatz bzw. die zugehörige Windenergieanlage zugeordnet ist.

Ein Modellgenerator beinhaltet einen Algorithmus, der basierend auf Lerndaten ein auf den spezifischen Anwendungsfall, d. h. an die vorgegebenen oder vorgebbare Randbedingungen wie Typ der Windenergieanlage, Standortbedingungen, vorgegebene Datensätze, vorgegebene oder vorgebbare Klassifizierungskriterien und/oder vorgegebene oder vorgebbare Kategorien angepasstes Klassifizierungsmodell erstellt.

Mehrheitskriterium bedeutet im Falle von zwei vorgegebenen Kategorien, dass die Windenergieanlage nach dem Mehrheitsprinzip der Kategorie zugeordnet wird, der die Mehrheit der verschiedenen Klassifizierungsmodelle die Windenergieanlage zugeordnet hat. Im Falle von mehr als zwei vorgegebenen Kategorien kann das Mehrheitsprinzip auch eine Berechnung der nach der vorliegenden Verteilung der Ergebnisse der verschiedenen Klassifizierungsmodelle wahrscheinlichsten Kategorie umfassen.

Das Klassifizierungskriterium umfasst bevorzugt eine Berechnungsvorschrift, mittels der aus einem Datensatz ein Indikator bestimmbar ist, der in Abhängigkeit von der Zugehörigkeit des Datensatzes zu einer der Kategorien typische Merkmale aufweist. Wie das Klassifizierungskriterium zu definieren ist, kann bevorzugt anhand von Modellrechnungen / Simulationen, aus theoretischen Überlegungen und/oder empirisch aus Feldmessungen hergeleitet werden. Durch die Definition des Klassifizierungskriteriums wird festgelegt, anhand welcher Berechnungsschritte der Indikator aus dem Datensatz ermittelt wird. Die Berechnung des Indikators für einen bestimmten Datensatz erfolgt bevorzugt durch Anwendung einfacher mathematischer Operationen auf den Datensatz. Vorzugsweise kann der Indikator durch eine direkte Berechnung aus dem Datensatz abgeleitet werden, also durch eine Berechnung die frei ist von Schätzwerten, Vorhersagen und vergleichbaren Unsicherheiten.

In der Lernphase kann anhand des Klassifizierungskriteriums aus jedem Lern-Datensatz ein Indikator ermittelt werden. Die auf einer Mehrzahl von Lern-Datensätzen basierenden Lerndaten können für jeden der Lern-Datensätze den Indikator und die zugehörige Kategorieinformation umfassen.

Die verschiedenen Modellgeneratoren können mit identischen Lerndaten gespeist werden. Möglich ist auch die Verwendung verschiedener Lerndaten für die Modellgeneratoren. Dies umfasst die Möglichkeit, dass die Lerndaten jeweils anhand verschiedener Lern-Datensätze ermittelt werden. Dies umfasst die Möglichkeit, dass die Lerndaten anhand verschiedener Klassifizierungskriterien ermittelt werden.

In der Arbeitsphase kann anhand des Klassifizierungskriteriums aus einem Arbeits-Datensatz ein Indikator abgeleitet werden. Die dem Klassifizierungsmodell zugeführten Arbeitsdaten können den Indikator umfassen, bzw. in einer besonderen Ausführungsform ausschließlich aus dem Indikator bestehen. Das Klassifizierungskriterium für jedes Klassifizierungsmodell ist vorzugsweise identisch zu dem Klassifizierungskriterium, das in der Lernphase zum Erzeugen des Klassifizierungsmodells verwendet wurde.

Bei dem erfindungsgemäßen Verfahren werden Lerndaten über eine Mehrzahl von Windenergieanlagen in jeden der Modellgeneratoren eingespeist. Jedes der Klassifizierungsmodelle erlaubt folglich eine Analyse, die auf einem Vergleich von mehreren Windenergieanlagen beruht. Indem die Analyse nicht mit lediglich einem Klassifizierungsmodell durchgeführt wird, kann die Zuverlässigkeit der Aussage erhöht werden. Es wird das Ergebnis als richtig angenommen, das von der Mehrzahl der Klassifizierungsmodelle ermittelt wurde. Umgekehrt gilt also ein Ergebnis als falsch, das lediglich von einer Minderheit der Klassifizierungsmodelle ermittelt wurde.

In der Lernphase werden die Modellgeneratoren mit den Informationen versorgt, mit denen ein Klassifizierungsmodell erstellt werden kann (Lerndaten). Die für einen Modellgenerator bestimmten Lerndaten basieren auf einer Mehrzahl von Lern-Datensätzen, wobei jeder Datensatz Informationen über eine einzelne Windenergieanlage repräsentiert. In dem Lern-Datensatz sind enthalten ein erster Parameterwert und ein von dem ersten Parameterwert abhängiger zweiter Parameterwert. Der erste Parameterwert kann sich auf eine Umgebungsbedingung beziehen, der die Windenergieanlage ausgesetzt ist (Umgebungsparameter). Der zweite Parameterwert kann sich auf einen Betriebszustand der Windenergieanlage beziehen (Betriebsparameter). Die Abhängigkeit zwischen den Parameterwerten kann beispielsweise darin bestehen, dass bei einer Änderung des ersten Parameterwerts sich auch der zweite Parameterwert ändert. Dies ist etwa der Fall, wenn der erste Parameterwert die Windgeschwindigkeit repräsentiert und der zweite Parameterwert die von der Windenergieanlage abgegebene Leistung repräsentiert. Bei einer Änderung der Windstärke (unabhängiger Parameter) ändert sich die erzeugte elektrische Leistung (abhängiger Parameter).

Bei den Parameterwerten kann es sich um einzelne Messwerte handeln, also um jeweils einen Messwert zu einem bestimmten Zeitpunkt. Eine aussagekräftigere Information kann erhalten werden, wenn es sich bei den Parameterwerten um Durchschnittswerte einer Zeitreihe handelt, beispielsweise um 10-Minuten-Durchschnittswerte. Weiter kann es von Vorteil sein, wenn der erste Parameterwert und der zweite Parameterwert jeweils eine Mehrzahl von Werten umfassen, die zu unterschiedlichen Zeitpunkten aufgenommen wurden.

Mit den Klassifizierungsmodellen soll eine Aussage ermöglicht werden, welcher von mehreren möglichen Kategorien ein bestimmter Datensatz zugehörig ist. Damit das Klassifizierungsmodell diese Aussage treffen kann, wird dem Modellgenerator in der Lernphase mit jedem Lern-Datensatz eine Kategorieinformation zur Verfügung gestellt. Die Kategorieinformation sagt aus, zu welcher der möglichen Kategorien ein bestimmter Datensatz der Lerndaten zugehörig ist. Bevorzugt ist für jede der Kategorien, zwischen denen das erfindungsgemäße Verfahren unterscheidet, mindestens ein Lern-Datensatz in die Lerndaten eingeflossen. Insbesondere kann für jede der Kategorien eine Mehrzahl, insbesondere eine größere Vielzahl von Datensätzen in die Lerndaten eingeflossen sein. Mit größerer Vielzahl sind mindestens 5 Datensätze, bevorzugt mindestens 10 Datensätze bezeichnet.

Die Klassifizierungsmodelle können so eingerichtet sein, dass sie zwischen zwei Kategorien unterscheiden. In Betracht kommen beispielsweise Kategoriepaare wie "unauffällig" und "auffällig", "Betriebszustand optimal" und "Betriebszustand nicht optimal", "Gondel-Fehlausrichtung ja" und "Gondel-Fehlausrichtung nein" und ähnliches. In die Lerndaten sind vorzugsweise beispielhafte Lern-Datensätze aus jeder der Kategorien eingeflossen, sodass die Datensätze typische Merkmale aus den jeweiligen Kategorien repräsentieren. Alle Modellgeneratoren können mit denselben Lerndaten gespeist werden. Möglich ist auch die Verwendung unterschiedlicher Lerndaten für die verschiedenen Modellgeneratoren. Alternativ können die Klassifizierungsmodelle auch so eingerichtet sein, dass sie über ein quantifizierbares Ergebnis eine Unterscheidung zwischen mehreren Kategorien ermöglichen. Hier kommen dann beispielsweise Kategorien wie "keine Gondel-Fehlausrichtung", "schwache Gondel-Fehlausrichtung" und "starke Gondel-Fehlausrichtung" in Betracht.

In der Arbeitsphase des erfindungsgemäßen Verfahrens steht die Information, welcher Kategorie ein bestimmter Datensatz zuzuordnen ist, anfangs nicht zur Verfügung. Vielmehr soll diese Information erst durch Anwendung der Klassifizierungsmodelle aus dem Datensatz gewonnen werden. Damit dies möglich ist, muss in das Klassifizierungsmodell ein Klassifizierungskriterium einfließen, anhand dessen eine Entscheidung zwischen den Kategorien möglich ist.

Das Klassifizierungskriterium kann auf einem anhand von Modellrechnungen oder theoretischen Überlegungen ermittelten Zusammenhang basieren. Anhand des Zusammenhangs kann eine Berechnungsvorschrift zur Ermittlung eines Indikators aus einem Datensatz bestimmt werden kann. Der Zusammenhang und die daraus resultierendes Berechnungsvorschrift sollten so ausgewählt werden, dass typische Unterschiede zwischen den Datensätzen offenbar werden, je nachdem, welcher der Kategorien ein Datensatz zugehörig ist.

Ein beispielhafter Zusammenhang, aus dem ein Klassifizierungskriterium abgeleitet werden kann, ist das unterschiedliche Leistungsverhalten einer Windenergieanlage, wenn eine leichte Schräganströmung entweder von rechts oder von links erfolgt. Durch den Drall, den der Wind durch den Rotor erhält, ergibt sich bei einer leichten Schräganströmung von links eine etwas andere Leistungskurve als bei einer leichten Schräganströmung von rechts. Es kann also aus der Differenz zwischen den beiden Kurven ein Klassifizierungskriterium abgeleitet werden.

Dieses Klassifizierungskriterium eignet sich in einer Weiterbildung der Erfindung auch zur quantitativen Klassifizierung einer Schräganströmung.

Beispielhaft kann der Bereich von +/-25° Schräganströmung in fünf gleich große Sektoren aufgeteilt werden. Die Differenz der Leistungskurven zwischen an einer Windenergieanlage gemessener positiver und negativer Schräganströmung ermöglicht bei ausreichend genauer Auswertung eine Aussage, in welcher der fünf genannten Schräganströmungskategorien (keine Schräganströmung, schwache oder starke Schräganströmung links oder rechts) sich die Windenergieanlage befindet.

Ebenso kann auch die Differenz der aktuellen Leistungskurve zur Leistungskurve ohne Schräganströmung ein beispielhaftes Klassifizierungskriterium für eine Schräganströmung darstellen. Ebenso kann vorteilhaft statt einem Leistungskurvenvergleich der Vergleich auf der Ebene des Energieertrags durchgeführt werden. Der Energieertrag, der ja letztendlich nichts anderes als die Integration der Leistung über der Zeit ist, ist insbesondere als Kriterium an Standorten mit starken Turbulenzen vorteilhaft, weil die Integration über die Zeit einen starken Mittelungseffekt hat. Ein weiteres vorteilhaftes Klassifizierungskriterium kann die Auftragung des Leistungsbeiwertes Cp des Rotors über der Windgeschwindigkeit oder auch nur die Ermittlung des maximalen Leistungsbeiwertes Cp_max im Vergleich zum Cp_max ohne Schräganströmung sein. Bei fast allen Windenergieanlagen befinden sich zwei mit erheblichem Abstand nebeneinander angeordnete Anemometer auf dem Gondeldach. Die Differenz der von diesen Anemometern gemessenen Windgeschwindigkeit hat sich ebenfalls als signifikantes Klassifizierungskriterium zur Erkennung von Schräganströmungen erwiesen.

Mit dem Modellgenerator kann ein Verfahren zur Mustererkennung in den Lerndaten durchgeführt werden. Die Mustererkennung kann auf die Indikatoren angewendet werden, die anhand des Klassifizierungskriteriums aus den Lern-Datensätzen abgeleitet wurden, wobei zur Unterscheidung zwischen den Kategorien die in den Lerndaten enthaltene Kategorieinformation herangezogen werden kann. Modellgeneratoren dieser Art sowie die zugrunde liegenden Algorithmen sind grundsätzlich bekannt. Verschiedene Algorithmen, auf denen die Modellgeneratoren basieren können, sind beispielsweise unter den Namen Decision Tree, Random Forest, Naive Bayes, Support Vector Machine und Neuronale Netze bekannt. Ein Vorteil der Verwendung von Indikatoren ist ein Effekt, der einem Tiefpassfilter gleicht. Relativ hochfrequente Lern-Datensätze werden durch die Berechnung der Indikatoren aggregiert, wodurch die Daten weniger Rauschen aufweisen. Der so aufbereitete Datensatz enthält somit zwar weniger, aber aussagekräftigere Daten, die in die Lerndaten eingehen. Dies schlägt sich auch im Analyseergebnis wieder, welches durch die Verwendung problemspezifischer Indikatoren geringere Fehlerraten in der Klassifizierung verspricht. Die verringerte Datenmenge hat weiterhin den Vorteil, dass die Berechnungszeit in den Modellgeneratoren in der Regel deutlich geringer ist als mit einer Berechnung die auf Basis von kompletten Lerndatensätzen durchgeführt wird.

Das erfindungsgemäße Verfahren wird vorzugsweise so durchgeführt, dass den Modellgeneratoren unterschiedliche Algorithmen zu Grunde liegen. Insbesondere können bei Verwendung von drei Modellgeneratoren drei unterschiedliche der soeben genannten Algorithmen den Modellgeneratoren zu Grunde liegen. Das Verfahren wird vorzugsweise mit einer ungeraden Anzahl von Modellgeneratoren/Klassifizierungsmodelle durchgeführt. Möglich ist beispielsweise die Verwendung von fünf Modellgeneratoren/Klassifizierungsmodelle, wobei die Modellgeneratoren auf den oben genannten fünf Algorithmen beruhen.

Die mit den unterschiedlichen Algorithmen erzeugten Klassifizierungsmodelle haben unterschiedliche Stärken und Schwächen. Bei jedem der Modelle muss also damit gerechnet werden, dass in der Arbeitsphase einzelne Datensätze nicht valide klassifiziert werden können. Diese Unsicherheit wird bei dem erfindungsgemäßen Verfahren durch die Verwendung der wenigstens drei verschiedenen Klassifizierungsmodelle ausgeglichen. Ordnet eine Mehrheit der Klassifizierungsmodelle den Datensatz einer bestimmten Kategorie zu, so wird diese Kategorie als richtig angenommen.

Wird ein Klassifizierungsmodell in der Arbeitsphase auf Arbeitsdaten einer Windenergieanlage angewendet, so kann das Ergebnis der Auswertung ein Wahrscheinlichkeitswert sein, dass die Windenergieanlage einer bestimmten Kategorie zuzuordnen ist. Um anhand des Wahrscheinlichkeitswerts eine Unterscheidung zwischen zwei Kategorien zu treffen, kann ein Schwellwert festgelegt. Bei einem Wahrscheinlichkeitswert oberhalb des Schwellwerts kann der Datensatz einer ersten Kategorie zugeordnet werden, bei einem Wahrscheinlichkeitswert unterhalb des Schwellwerts kann der Datensatz einer zweiten Kategorie zugeordnet werden. In einer Weiterbildung der Erfindung kann aus dem Wahrscheinlichkeitswert auch eine Aussage über die Verlässlichkeit der Klassifizierung abgeleitet werden.

Der Arbeits-Datensatz, der in der Arbeitsphase ausgewertet wird, ist vorzugsweise analog zu den Lern-Datensätzen der Lernphase zusammengesetzt, wobei jedoch der Arbeits-Datensatz abweichend von der Lernphase keine Kategorieinformation umfasst. Umfasst von dem Arbeits-Datensatz sind aber ein erster Parameterwert und ein zweiter Parameterwert. In der Arbeitsphase werden aus dem zu analysierenden Arbeits-Datensatz zunächst anhand des Klassifizierungskriteriums die Arbeitsdaten errechnet, die die Klassifizierungsmodelle verarbeiten kann. Mit den drei Klassifizierungsmodellen werden die Arbeitsdaten ausgewertet, sodass jedes Klassifizierungsmodell den Arbeits-Datensatz einer der Kategorien zuordnet.

Die endgültige Zuordnung zu einer der Kategorien erfolgt anhand eines Mehrheitskriteriums. Der Datensatz wird also zu der Kategorie zugeordnet, den die Mehrheit der Klassifizierungsmodelle ermittelt. Wenn das Verfahren mit einer ungeraden Anzahl von Klassifizierungsmodellen durchgeführt wird und zwischen zwei Kategorien zu entscheiden ist, führt das Mehrheitskriterium immer zu einem eindeutigen Ergebnis. Wird das Verfahren mit einer geraden Anzahl von Klassifizierungsmodellen durchgeführt, so bedarf es eines zusätzlichen Kriteriums für den Fall, dass verschiedene Kategorien von der gleichen Anzahl von Klassifizierungsmodelle ermittelt werden.

Das erfindungsgemäße Verfahren bietet sich für eine laufende Optimierung der Klassifizierungsmodelle an. Ist beispielsweise in der Arbeitsphase ein bestimmter Datensatz mit einer bestimmten Wahrscheinlichkeit (zum Beispiel 70 %) einer Kategorie zugeordnet worden (zum Beispiel der Kategorie "auffällig"), so kann durch einen Servicetechniker überprüft werden, ob diese Zuordnung richtig ist. Auf Basis der von dem Servicetechniker festgestellten Kategorie kann der betreffende Datensatz als Lern-Datensatz verwendet werden, wobei die Kategorieinformation entsprechend der von dem Servicetechniker ermittelten Kategorie festgelegt wird. Das Modell kann also durch die laufende weitere Generierung von Lerndaten immer weiter verbessert werden, sodass sich die Zuverlässigkeit der Kategorisierung erhöht.

Die Zuverlässigkeit des Verfahrens kann weiter erhöht werden, indem dem Modellgenerator in der Lernphase eine Mehrzahl von Klassifizierungskriterien zur Verfügung gestellt wird. Ein Muster, das sich in einer Mehrzahl von Klassifizierungskriterien widerspiegelt, hat regelmäßig eine höhere Aussagekraft als ein anhand nur eines Klassifizierungskriteriums ermitteltes Muster.

In einer Fortbildung können die beiden Kategorien, denen ein Datensatz mit dem erfindungsgemäßen Verfahren zugeordnet werden kann, in weitere Untergruppen unterteilt sein. Gibt es eine Mehrzahl von Klassifizierungsmodellen, die einen Datensatz einer bestimmten Untergruppe innerhalb einer Kategorie zuordnen, so kann die betreffende Untergruppe als ergänzende Information des Verfahrens ausgegeben werden. Die Anzahl der Untergruppen innerhalb der Kategorien kann an die erwartete Treffgenauigkeit des Verfahrens angepasst werden.

Für die Zuverlässigkeit des Verfahrens ist es von Vorteil, wenn Datensätze von hoher Güte verwendet werden. Dies gilt sowohl für die Lernphase als auch für die Arbeitsphase. Datensätze von minderer Güte können deswegen in einem vorangehenden Verfahrensschritt aussortiert werden. Beispielsweise können in dem Datensatz enthaltene Sensordaten auf Plausibilität geprüft werden. Weicht beispielsweise der mit einem Sensor ermittelte Messwert deutlich von dem erwarteten Wert ab, so kann geschlossen werden, dass der Sensor fehlerhaft ist, und der betreffende Datensatz aussortiert werden. Ebenfalls fehlerhaft kann ein Sensor sein, wenn sich die Werte des Sensors in einem kurzen Zeitraum sehr stark verändern (Sprungfunktion) oder die Werte des Sensors deutlich stärker streuen als in anderen Zeiträumen (Heteroskedastizität). Schließlich können auch unplausible Werte des Sensors Anzeichen für einen Fehler sein.

Ferner können die Daten in einem vorangehenden Verfahrensschritt einer Analyse unterzogen werden, ob innerhalb des Zeitraums, auf den die Daten sich beziehen eine systematische Veränderung stattgefunden hat (Changepoint-Analyse). Datensätze, die sich über eine systematische Veränderung hinweg erstrecken, können mit dem erfindungsgemäßen Verfahren regelmäßig nicht sinnvoll ausgewertet werden. Auch solche Datensätze sollten deswegen aussortiert werden.

Vor der Verwendung von Daten kann außerdem eine Konsistenzprüfung durchgeführt werden. Beispielsweise kann geprüft werden ob die Windenergieanlage ihre Nennleistung erreicht. Durch Überprüfung der Standardabweichung der Windgeschwindigkeit kann geprüft werden ob die Anemometer vertauscht installiert wurden. Veränderungen bei der Leistungskurve können überprüft werden. Zur weiteren Konsistenzprüfung können Minimum, Maximum und Median der Temperatur für jeden betrachteten Zeitraum ausgegeben werden.

In einer bevorzugten Ausführungsform wird das Verfahren verwendet, um zu analysieren, ob eine Windenergieanlage einer Fehlausrichtung unterliegt, ob es also eine Abweichung zwischen der Ausrichtung der Gondel und der mittleren Windrichtung gibt. Es kann zwei Kategorien geben, zwischen denen mit den Klassifizierungsmodellen unterschieden wird, nämlich die Kategorien "Gondel-Fehlausrichtung ja" und "Gondel-Fehlausrichtung nein".

Die Lern-Datensätze, aus denen die Lerndaten ermittelt werden, können als erste Parameterwerte Messdaten über die Parameter Windgeschwindigkeit und Windfahnenposition umfassen. Der davon abhängige zweite Parameterwert in dem Lern-Datensatz kann sich auf die Leistung beziehen, die die Windenergieanlage abgibt. Bei den Parameterwerten handelt es sich vorzugsweise um Zeitreihen, die sich jeweils auf dieselben Zeiträume beziehen. Bei den Parameterwerten kann es sich insbesondere um 10-Minuten-Mittelwerte der betreffenden Parameter handeln.

In der Lernphase werden den jeweiligen Modellgeneratoren vorzugsweise wenigstens vier Lern-Datensätze mit der Kategorieinformation "Gondel-Fehlstellung ja" und wenigstens vier Lern-Datensätze mit der Kategorieinformation "Gondel-Fehlstellung nein" zugeführt.

Auch wenn die Gondel richtig zur mittleren Windrichtung ausgerichtet ist (Gondel-Fehlausrichtung nein), kann es durch laufende geringfügige Änderungen der Windgeschwindigkeit zu einer momentanen Schräganströmung kommen. Die Auswirkungen einer momentanen Schräganströmung auf die Leistungskurve sind unterschiedlich, je nachdem, ob es sich um eine Schräganströmung von links oder um eine Schräganströmung von rechts handelt. Es ergibt sich also eine charakteristische Differenz zwischen den Leistungskurven bei den unterschiedlichen Richtungen der Schräganströmung. Diese charakteristische Differenz kann numerisch ausgewertet werden, indem die Leistungskurven in mehrere Abschnitte unterteilt werden und für jeden der Abschnitte die Differenz der Integrale der jeweiligen Leistungskurven betrachtet wird. Diese Integraldifferenz bildet einen Indikator, der charakteristische Merkmale aufweist, je nachdem, ob die Windenergieanlage einer Schräganströmung unterliegt. Dieser Indikator wird den Modellgeneratoren mit den Lerndaten zugeführt. Die Modellgeneratoren können auf Basis mehrerer derartiger Indikatoren und unter Berücksichtigung der zugehörigen Kategorieinformation eine Mustererkennung durchführen und daraus jeweils ein Klassifizierungsmodell entwickeln.

In der Arbeitsphase wird ein entsprechender Datensatz ohne Kategorieinformation mit jedem der Klassifizierungsmodelle analysiert. Jedes der Klassifizierungsmodelle ordnet den Datensatz in eine der Kategorien "Gondel-Fehlstellung ja" oder "Gondel-Fehlstellung nein" ein. Anhand eines Mehrheitskriteriums der Klassifizierungsmodelle erfolgt dann die endgültige Zuordnung des Datensatzes zu einer der beiden Kategorien.

In der Arbeitsphase ist zu erwarten, dass die Kategorie "Gondel-Fehlstellung nein" häufiger belegt wird als die Kategorie "Gondel-Fehlstellung ja". Wird ein Datensatz von wenigstens der Hälfte der Klassifizierungsmodelle in die Kategorie "Gondel-Fehlstellung ja" eingeordnet, kann ein Servicetechniker beauftragt werden, die Gondelausrichtung der betreffenden Windenergieanlage vor Ort zu untersuchen. Stellt der Servicetechniker tatsächlich eine Fehlausrichtung der Gondel fest, kann die Kategorieinformation bestätigt werden. Aus dem betreffenden Datensatz kann durch Hinzufügung der Kategorieinformation ein Lern-Datensatz erzeugt werden. Mit dem Lern-Datensatz können die Modellgeneratoren gespeist werden, um die Klassifizierungsmodelle zu verbessern.

In der Lernphase und/oder in der Arbeitsphase können Datensätze verwendet werden, die sich auf Zeiträume beziehen, in denen die Windenergieanlage im Teillastbereich betrieben wurde. Phasen des Stillstands sind grundsätzlich ungeeignet für eine Überprüfung. Bei einem Betrieb der Windenergieanlage unter Volllast besteht der Nachteil, dass die Windleistung und die Anlagenleistung nicht direkt miteinander korrelieren.

Das Verfahren kann vorteilhaft auch zur Erkennung von Unregelmäßigkeiten in der Einstellung der Rotorblattwinkel oder der Drehzahleinstellungen (in der Regel über eine Drehzahl- Drehmoment-Kennlinie) oder ganz allgemein zur Validierung der Leistungskurve eingesetzt werden. Für all diese Analysen des Betriebszustandes ist eine Auswertung von Datensätzen, die den Teillastbetrieb betreffen, besonders vorteilhaft. Im Vollastbetrieb ist das Verfahren besonders geeignet, einen Betriebszustand in Hinblick auf die vorliegenden Anlagenbelastungen zu analysieren.

Die Erfindung betrifft außerdem ein System zum Analysieren eines Betriebszustands einer Windenergieanlage. Das System umfasst ein Lernmodul zum Entwickeln von wenigstens drei verschiedenen Klassifizierungsmodellen. Das System umfasst ein Arbeitsmodul zum Analysieren von Arbeitsdaten der Windenergieanlage mit jedem der Klassifizierungsmodelle und zum Zuordnen der Windenergieanlage zu einer Kategorie anhand eines Mehrheitskriteriums der Klassifizierungsmodelle. Das Lernmodul umfasst einen ersten Modellgenerator zum Erzeugen des ersten Klassifizierungsmodells, einen zweiten Modellgenerator zum Erzeugen des zweiten Klassifizierungsmodells und einen dritten Modellgenerator zum Erzeugen des dritten Klassifizierungsmodells. Die Modellgeneratoren sind dazu ausgelegt, Lerndaten auszuwerten, um die Klassifizierungsmodelle zu erzeugen. Die Lerndaten basieren jeweils auf einer Mehrzahl von Lern-Datensätzen, wobei jeder Lern-Datensatz einer Windenergieanlage zugeordnet ist, wobei jeder Lern-Datensatz eine Kategorieinformation über die Windenergieanlage umfasst, wobei jeder Lern-Datensatz einen ersten Parameterwert und einem von dem ersten Parameterwert abhängigen zweiten Parameterwert enthält und wobei die Ableitung der Lerndaten anhand eines die Abhängigkeit zwischen dem ersten Parameterwert und dem zweiten Parameterwert repräsentierenden Klassifizierungskriteriums erfolgt.

Das System kann mit weiteren Merkmalen fortgebildet werden, die im Zusammenhang des erfindungsgemäßen Verfahrens beschrieben sind. Das Verfahren kann mit weiteren Merkmalen fortgebildet werden, die im Zusammenhang des erfindungsgemäßen Systems beschrieben sind.

Die Erfindung wird nachfolgend unter Bezugnahme auf die beigefügten Zeichnungen anhand vorteilhafter Ausführungsformen beispielhaft beschrieben. Es zeigen:
Fig. 1: eine schematische Darstellung von acht Windenergieanlagen zur Gewinnung von Lern-Datensätzen;
Fig. 2: eine grafische Darstellung eines erfindungsgemäßen Lern-Datensatzes einer ersten Kategorie;
Fig. 3: eine grafische Darstellung eines erfindungsgemäßen Lern-Datensatzes einer zweiten Kategorie;
Fig. 4: ein Blockdiagramm einer erfindungsgemäßen Lernphase;
Fig. 5: eine schematische Darstellung von zu analysierenden Windenergieanlagen; und
Fig. 6: ein Blockdiagramm einer erfindungsgemäßen Arbeitsphase.

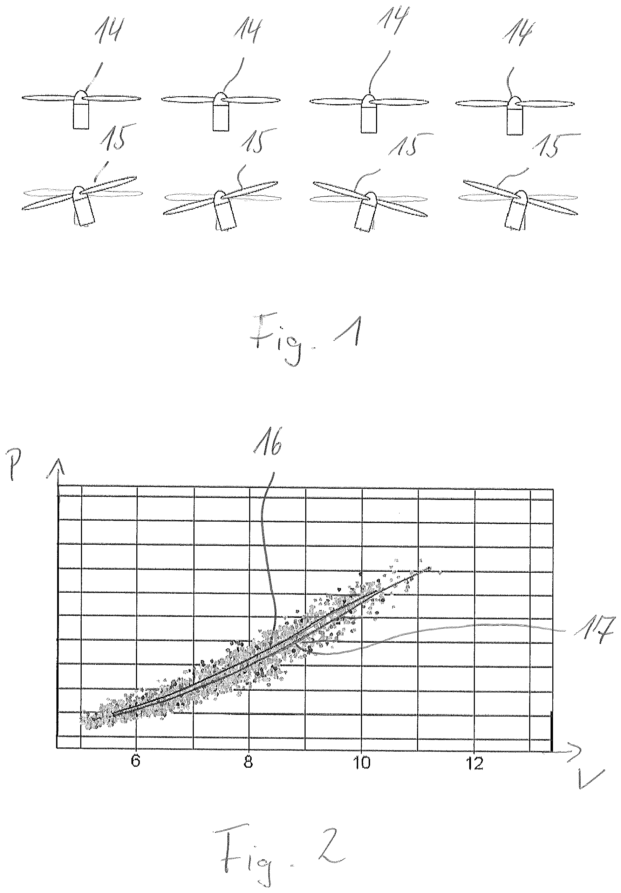

In Fig. 1 gezeigt sind vier Windenergieanlagen 14, die richtig zur mittleren Windrichtung ausgerichtet sind, die also frei von einer Gondel-Fehlausrichtung sind. Gezeigt sind außerdem vier Windenergieanlagen 15, die einer Gondel-Fehlausrichtung unterliegen. In Fig. 2 sind Messdaten, die an einer der Windenergieanlagen 14 aufgenommen wurden grafisch dargestellt. Es handelt sich um die Darstellung einer Leistungskurve, bei der auf der horizontalen Achse die Windgeschwindigkeit V in m/s und auf der vertikalen Achse die von der Windenergieanlage 14 erzeugte elektrische Leistung P aufgetragen ist. Jeder der in der Grafik aufgetragenen Punkte stellt einen 10-Minuten-Mittelwert der Leistung über der Windgeschwindigkeit dar.

Außerdem aufgezeichnet bei der Windenergieanlage 14 wurden die Sensordaten einer auf der Gondel der Windenergieanlage 14 angeordneten Windfahne. Auch wenn die Windenergieanlage richtig zur mittleren Windrichtung ausgerichtet ist, kann es aufgrund kurzfristiger Schwankungen der Windrichtung zu einer momentanen Schräganströmung kommen. Eine momentane Schräganströmung ist folglich kein Hinweis auf eine Gondel-Fehlausrichtung. Die Sensordaten der Windfahne entsprechen jeweils einer Information über die momentane Windrichtung. Die Daten von der Windfahne werden ebenfalls in 10-Minuten Mittelwerte überführt und den in der Grafik dargestellten Punkten zugeordnet. Je nach Wert der momentanen Windrichtung sind die Punkte in unterschiedlich dunklen Grautönen eingefärbt.

Anhand der zusätzlichen Information über die momentane Schräganströmung ist es möglich, zwei unterschiedliche Leistungskurven zu ermitteln, wobei eine der Leistungskurven sich auf den Winkelbereich zwischen beispielsweise 0° und +8° zwischen Ausrichtung der Gondel und momentaner Windrichtung bezieht und wobei die andere Leistungskurve sich auf den Winkelbereich zwischen -8° und 0° bezieht.

Die beiden Leistungskurven 16, 17 sind in Fig. 2 eingezeichnet. Die Leistungskurve 16 für den Winkelbereich 0° bis +8° liegt etwas oberhalb der Leistungskurve 17 für den Winkelbereich -8° bis 0°. Dies erklärt sich dadurch, dass durch den Drall, den der Wind durch den Rotor erhält, eine momentane Schräganströmung aus der einen Richtung sich anders auswirkt als eine momentane Schräganströmung aus der anderen Richtung.

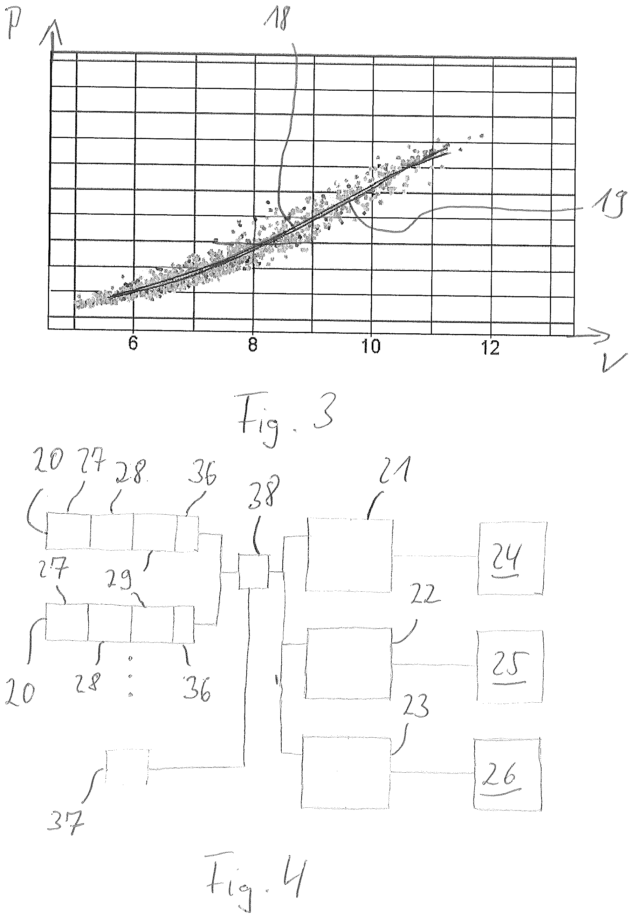

In Fig. 1 sind außerdem vier Windenergieanlagen 15 dargestellt, bei denen die Ausrichtung der Gondel von der mittleren Windrichtung abweicht, die also einer Gondel-Fehlausrichtung unterliegen. Die Fig. 3 zeigt eine grafische Darstellung eines beispielhaften Datensatzes, der bei einer der Windenergieanlagen 15 aufgenommen wurde. Erneut zeigen die Punkte 10-Minuten-Mittelwerte der Leistung, die über der Windgeschwindigkeit aufgetragen sind. Die Färbung der Punkte gibt die Abweichung zwischen der Ausrichtung der Gondel und der von der Windfahne angezeigten momentanen Windrichtung wieder. Anhand dieser Informationen lassen sich wieder zwei Leistungskurven 18, 19 gewinnen, wobei die Leistungskurve 18 dem Winkelbereich 0° bis +8° zwischen den beiden Richtungen und die Leistungskurve 19 dem Winkelbereich -8° bis 0° entspricht.

Die Abweichung zwischen den beiden Leistungskurven 18, 19 in Fig. 3 ist geringer als die Abweichung zwischen den beiden Leistungskurven 16, 17 in Fig. 2. Aus der Abweichung zwischen den Leistungskurven lässt sich ein Hinweis ableiten, ob die Windenergieanlage einer Gondel-Fehlausrichtung unterliegt.

Für das erfindungsgemäße Verfahren wird der Unterschied zwischen den Leistungskurven 16, 17, 18, 19, der in den Figuren 2 und 3 sichtbar ist, in ein quantifizierbares Klassifizierungskriterium überführt. Die Leistungskurven werden dazu entlang der horizontalen Achse in eine Mehrzahl von Abschnitten unterteilt (beispielsweise V = 5 m/s bis 6 m/s; V= 6 m/s bis 7 m/s usw.). In jedem der Abschnitte wird ein Integral der beiden Leistungskurven berechnet und die Differenz der beiden Integrale ermittelt. Die Differenz der Integrale entspricht der Abweichung zwischen den Leistungskurven in dem betreffenden Abschnitt. Die Integraldifferenz bildet demnach im Sinne der Erfindung einen Indikator, der in Abhängigkeit von der Schräganströmung charakteristische Merkmale aufweist. Mit dem Klassifizierungskriterium wird eine Berechnungsvorschrift vorgegeben, mit der der Indikator aus einem Datensatz errechnet werden kann.

Anhand der in Fig. 1 dargestellten Windenergieanlagen 14, 15 können Lern-Datensätze der in den Figuren 2 und 3 gezeigten Art gewonnen werden. Lern-Datensätze zeichnen sich dadurch aus, dass bekannt ist, ob der Datensatz in die Kategorie "Gondel-Fehlausrichtung ja" oder die Kategorie "Gondel-Fehlausrichtung nein" gehört. Jeder Lern-Datensatz ist einer einzelnen der Windenergieanlagen 14, 15 zugeordnet.

In der in Fig. 4 dargestellten Lernphase des erfindungsgemäßen Verfahrens werden drei verschiedene Modellgeneratoren 21, 22, 23 mit Lerndaten gespeist, um drei Klassifizierungsmodelle 24, 25, 26 zu gewinnen. Die Lerndaten werden aus Lern-Datensätzen 20 abgeleitet, wobei jeder Lern-Datensatz 20 eine Vielzahl von Messwerten 27 der Windgeschwindigkeit sowie eine Vielzahl von Sensordaten 28 der auf der Gondel der Windenergieanlage angeordneten Windfahne umfasst. Die Messwerte 27 und die Sensordaten 28 bilden erste Parameterwerte im Sinne der Erfindung.

Jeder Lern-Datensatz 20 umfasst außerdem eine Vielzahl von Leistungsmesswerten 29 der Windenergieanlage. Die Leistungsmesswerte 29, die von der Windrichtung und der Windstärke abhängig sind, bilden zweite Parameterwerte im Sinne der Erfindung. Jeder Lern-Datensatz 20 enthält außerdem eine Kategorieinformation 36, ob der Lern-Datensatz 20 zu der Kategorie "Gondel-Fehlausrichtung ja" oder die Kategorie "Gondel-Fehlausrichtung nein" gehört.

Die Lern-Datensätze 20 sowie das zugehörige Klassifizierungskriterium 37 werden einem Rechenmodul 38 zugeführt. In dem Rechenmodul 38 wird anhand der durch das Klassifizierungskriterium 37 definierten Rechenvorschrift ein Indikator für jeden der Lern-Datensätze 20 berechnet, es wird also für jeden der Datensätze die oben beschriebene Integraldifferenz der Leistungskurven 16, 17, 18, 19 ermittelt. Das Rechenmodul 38 gibt Lerndaten aus, die für jeden der Lern-Datensätze 20 einen Indikator sowie die zugehörige Kategorieinformation 36 umfassen. Die Lerndaten werden den Modellgeneratoren 21, 22, 23 zugeführt, wobei in diesem Ausführungsbeispiel alle drei Modellgeneratoren 21, 22, 23 mit identischen Lerndaten gespeist werden.

In den Lerndaten erkennen die Modellgeneratoren 21, 22, 23 anhand von Algorithmen wie Decision Tree, Random Forest, Naive Bayes, Support Vector Machine und Neuronale Netze Muster, durch die eine Zuordnung der Lern-Datensätze 20 zu den Kategorien möglich wird. Aus diesen Mustern wird jeweils ein Klassifizierungsmodell 24, 25, 26 entwickelt. Jedes der Klassifizierungsmodelle 24, 25, 26 hat die Fähigkeit, einen Datensatz, dessen Kategorie unbekannt ist, einer der Kategorien zuzuordnen.

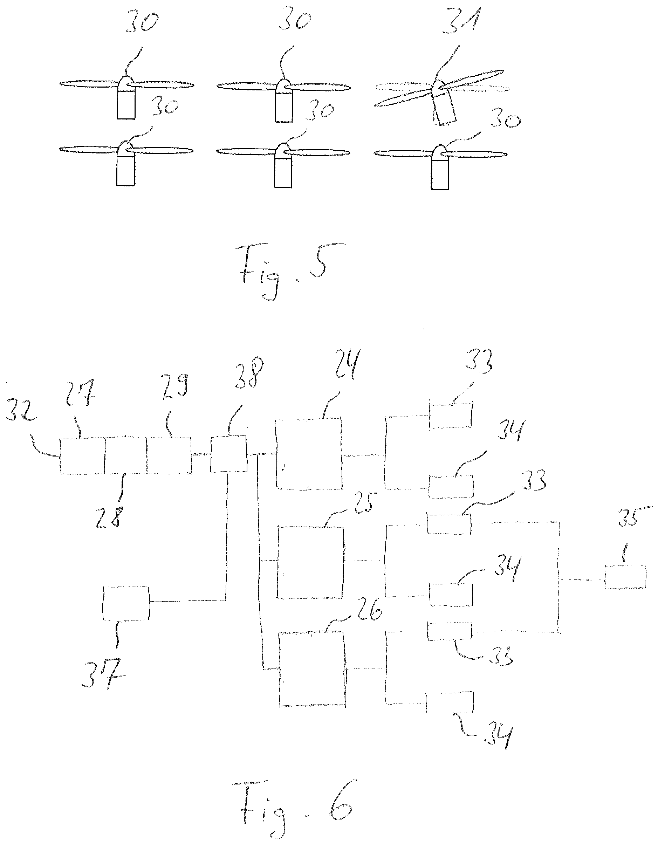

In der Arbeitsphase des erfindungsgemäßen Verfahrens werden entsprechende Datensätze 32 (also Datensätze, die aus entsprechenden Messwerten zusammengesetzt sind) bei Windenergieanlagen 30, 31 aufgenommen (Fig. 5), bei denen unbekannt ist, ob sie in die Kategorie "Gondel-Fehlausrichtung nein" oder die Kategorie "Gondel-Fehlausrichtung ja" gehören.

Die Datensätze 32 umfassen gemäß Fig. 6 Messwerte 27 der Windgeschwindigkeit und Sensordaten 28 der Windfahne als erste Parameterwerte sowie Leistungsmesswerte 29 der Windenergieanlagen 30, 31 als zweite Parameterwerte. Der Datensatz 32 wird dem Rechenmodul 38 zugeführt, das anhand des Klassifizierungskriteriums 37 die oben beschriebene Integraldifferenz der Leistungskurven 16, 17, 18, 19 berechnet und damit einen für Schräganströmung charakteristischen Indikator für den Datensatz 32 ermittelt. Dieser Indikator wird den Klassifizierungsmodellen 24, 25, 26 zugeführt und bildet damit im Sinne der Erfindung Arbeitsdaten für die Klassifizierungsmodelle 24, 25, 26.

Die Klassifizierungsmodelle 24, 25, 26 analysieren den Indikator des Datensatzes 32. Das Ergebnis der Analyse ist bei jedem der Klassifizierungsmodelle 24, 25, 26 eine Zuordnung des Datensatzes 32 entweder zu der Kategorie 33 "Gondel-Fehlausrichtung ja" oder zu der Kategorie 34 "Gondel-Fehlausrichtung nein". Bei einer übereinstimmenden Aussage aller Klassifizierungsmodelle 24, 25, 26 wird die betreffende Kategorie als endgültiges Ergebnis der Klassifizierung festgelegt.

In Fig. 6 ist das Ergebnis der Auswertung für die Windenergieanlage 31 dargestellt, die einer Gondel-Fehlausrichtung unterliegt. Die Windenergieanlage 31 wird von den Klassifizierungsmodellen 25, 26 in die Kategorie 33 "Gondel-Fehlausrichtung ja" einsortiert. Hingegen stellt das Klassifizierungsmodell 24 die Gondel-Fehlausrichtung nicht fest und sortiert die Windenergieanlage 31 in die Kategorie 34 "Gondel-Fehlausrichtung nein" ein. Geben die Klassifizierungsmodelle 24, 25, 26 unterschiedliche Ergebnisse aus, so wird über die endgültige Klassifizierung anhand eines Mehrheitskriteriums entschieden. Hier hat die Mehrheit der Klassifizierungsmodelle die Windenergieanlage 31 der Kategorie 33 "Gondel-Fehlausrichtung ja" einsortiert, sodass die Kategorie 33 als endgültiges Ergebnis 35 der Auswertung ausgegeben wird.

Es wird dann ein Servicetechniker beauftragt, um die Windenergieanlage 31 vor Ort zu untersuchen. Bestätigt sich die Gondel-Fehlausrichtung, so liegt eine überprüfte Kategorieinformation 36 für den Datensatz 32 vor. Der Datensatz 32 kann als Lern-Datensatz 20 verwendet werden, der allen Modellgeneratoren 21, 22, 23 zusätzlich zugeführt wird, um die Klassifizierungsmodelle 24, 25, 26 zu optimieren.

## Patentansprüche

1. Verfahren zum Analysieren eines Betriebszustands einer Windenergieanlage (30, 31), wobei in einer Lernphase wenigstens drei verschiedene Klassifizierungsmodelle (24, 25, 26) entwickelt werden und in einer Arbeitsphase Arbeitsdaten (32) der Windenergieanlage (30, 31) mit jedem der Klassifizierungsmodelle (24, 25, 26) analysiert werden und wobei die Windenergieanlage (30, 31) anhand eines Mehrheitskriteriums der Klassifizierungsmodelle (24, 25, 26) einer Kategorie (33, 34) zugeordnet wird, wobei die Lernphase die folgenden Schritte umfasst:
a. Ermitteln von ersten Lerndaten für einen ersten Modellgenerator (21), so dass der erste Modellgenerator (21) ein erstes Klassifizierungsmodell (24) errechnet,
b. Ermitteln von zweiten Lerndaten für einen zweiten Modellgenerator (21), so dass der zweite Modellgenerator (21) ein zweites Klassifizierungsmodell (25) errechnet,
c. Ermitteln von dritten Lerndaten (20) für einen dritten Modellgenerator, so dass der dritte Modellgenerator (23) ein drittes Klassifizierungsmodell (26) errechnet,
wobei die Lerndaten aus einer Mehrzahl von Lern-Datensätzen (20) abgeleitet werden, wobei jeder Lern-Datensatz (20) einer Windenergieanlage (14, 15) zugeordnet ist, wobei jeder Lern-Datensatz (20) eine Kategorieinformation (36) über die Windenergieanlage (14, 15) umfasst, wobei jeder Lern-Datensatz (20) einen ersten Parameterwert (27, 28) und einen von dem ersten Parameterwert (27, 28) abhängigen zweiten Parameterwert (29) enthält und wobei die Ableitung der Lerndaten aus den Lern-Datensätzen anhand eines die Abhängigkeit zwischen dem ersten Parameterwert (27, 28) und dem zweiten Parameterwert (29) repräsentierenden Klassifizierungskriteriums (37) erfolgt.

2. Analyseverfahren nach Anspruch 1, **dadurch gekennzeichnet, dass** der erste Parameterwert (27, 28) und/oder der zweite Parameterwert (29) ein aus einer Zeitreihe ermittelter Durchschnittswert ist.

3. Analyseverfahren nach Anspruch 1 oder 2, dass jeder Lern-Datensatz (20) eine Mehrzahl von ersten Parameterwerten (27, 28) und/oder zweiten Parameterwerte (29) umfasst, vorzugsweise eine größere Vielzahl von ersten Parameterwerten (27, 28) und/oder zweiten Parameterwerte (29) umfasst.

4. Analyseverfahren nach einem der Ansprüche 1 bis 3, **dadurch gekennzeichnet, dass** die Modellgeneratoren (21, 22, 33) mit identischen Lerndaten gespeist werden.

5. Analyseverfahren nach einem der Ansprüche 1 bis 4, **dadurch gekennzeichnet, dass** die Klassifizierungsmodelle (24, 25, 26) so eingerichtet sind, dass sie zwischen zwei Kategorien (33, 34) entscheiden.

6. Analyseverfahren nach einem der Ansprüche 1 bis 5, **dadurch gekennzeichnet, dass** die Modellgeneratoren (24, 25, 26) in den Lerndaten ein Verfahren zur Mustererkennung durchführen.

7. Analyseverfahren nach Anspruch 6, **dadurch gekennzeichnet, dass** die Modellgeneratoren auf einem oder mehreren der folgenden Algorithmen beruhen: Decision Tree, Random Forest, Naive Bayes, Support Vector Machine und Neuronale Netze.

8. Analyseverfahren nach einem der Ansprüche 1 bis 7, **dadurch gekennzeichnet, dass** es mit einer ungeraden Anzahl von Klassifizierungsmodellen (24, 25, 26) durchgeführt wird.

9. Analyseverfahren nach einem der Ansprüche 1 bis 8, **dadurch gekennzeichnet, dass** die mit einem der Klassifizierungsmodelle (24, 25, 26) ermittelte Kategorieinformation (36) manuell überprüft wird und dass unter Verwendung der bestätigten Kategorieinformation (36) ein weiterer Lern-Datensatz (20) erzeugt wird, der einem oder mehreren der Modellgeneratoren (21, 22, 23) zugeführt wird.

10. Analyseverfahren nach einem der Ansprüche 1 bis 9, **dadurch gekennzeichnet, dass** die Klassifizierungsmodelle (24, 25, 26) zwischen den Kategorien "Gondel-Fehlausrichtung ja" und "Gondel-Fehlausrichtung nein" unterscheiden.

11. Analyseverfahren nach Anspruch 10, **dadurch gekennzeichnet, dass** es mit Datensätzen (32) durchgeführt wird, die einen Teillastbetrieb der Windenergieanlage (30, 31) repräsentieren.

12. System zum Analysieren eines Betriebszustands einer Windenergieanlage (30, 31), mit einem Lernmodul zum Entwickeln von wenigstens drei verschiedenen Klassifizierungsmodellen (24, 25, 26) und mit einem Arbeitsmodul zum Analysieren eines Datensatzes (32) der Windenergieanlage (30, 31) mit jedem der Klassifizierungsmodelle (24, 25, 26) und zum Zuordnen der Windenergieanlage (30, 31) zu einer Kategorie (33, 34) anhand eines Mehrheitskriteriums der Klassifizierungsmodelle (24, 25, 26), wobei das Lernmodul einen ersten Modellgenerator (21) zum Erzeugen des ersten Klassifizierungsmodells (24), einen zweiten Modellgenerator (22) zum Erzeugen des zweiten Klassifizierungsmodells (25) und einen dritten Modellgenerator (23) zum Erzeugen des dritten Klassifizierungsmodells (26) umfasst, wobei die Modellgeneratoren (21, 22, 23) dazu ausgelegt sind, Lerndaten auszuwerten, um die Klassifizierungsmodelle (24, 25, 26) zu erzeugen, wobei die Lerndaten jeweils aus einer Mehrzahl von Lern-Datensätzen (20) abgeleitet werden, wobei jeder Lern-Datensatz (20) einer Windenergieanlage (14, 15) zugeordnet ist, wobei jeder Lern-Datensatz (20) eine Kategorieinformation (36) über die Windenergieanlage (14, 15) umfasst, wobei jeder Lern-Datensatz (20) einen ersten Parameterwert (27, 28) und einen von dem ersten Parameterwert (27, 28) abhängigen zweiten Parameterwert (29) enthält und wobei die Ableitung der Lerndaten aus den Lern-Datensätzen (20) anhand eines die Abhängigkeit zwischen dem ersten Parameterwert (27, 28) und dem zweiten Parameterwert (29) repräsentierenden Klassifizierungskriteriums (37) erfolgt.

## Claims

1. Method for analysing an operating state of a wind turbine (30, 31), wherein at least three different classification models (24, 25, 26) are developed in a learning phase and operating data (32) of the wind turbine (30, 31) are analysed using each of the classification models (24, 25, 26) in an operating phase and wherein the wind turbine (30, 31) is assigned to a category (33, 34) on the basis of a majority criterion of the classification models (24, 25, 26), wherein the learning phase comprises the following steps:
a. determining first learning data for a first model generator (21), so that the first model generator (21) calculates a first classification model (24),
b. determining second learning data for a second model generator (21), so that the second model generator (21) calculates a second classification model (25),
c. determining third learning data (20) for a third model generator, so that the third model generator (23) calculates a third classification model (26),
wherein the learning data are derived from a plurality of learning data records (20), wherein each learning data record (20) is associated with a wind turbine (14, 15), wherein each learning data record (20) comprises category information (36) about the wind turbine (14, 15), wherein each learning data record (20) contains a first parameter value (27, 28) and a second parameter value (29), which is dependent on the first parameter value (27, 28), and wherein the learning data are derived from the learning data records on the basis of a classification criterion (37) that represents the dependency between the first parameter value (27, 28) and the second parameter value (29).

2. Analysis method according to Claim 1, **characterized in that** the first parameter value (27, 28) and/or the second parameter value (29) is an average value determined from a time series.

3. Analysis method according to Claim 1 or 2, **characterized in that** each learning data record (20) comprises a plurality of first parameter values (27, 28) and/or second parameter values (29), preferably comprises a larger multiplicity of first parameter values (27, 28) and/or second parameter values (29).

4. Analysis method according to one of Claims 1 to 3, **characterized in that** the model generators (21, 22, 33) are supplied with identical learning data.

5. Analysis method according to one of Claims 1 to 4, **characterized in that** the classification models (24, 25, 26) are configured such that they decide between two categories (33, 34).

6. Analysis method according to one of Claims 1 to 5, **characterized in that** the model generators (24, 25, 26) perform a method for pattern recognition in the learning data.

7. Analysis method according to Claim 6, **characterized in that** the model generators are based on one or more of the following algorithms: decision tree, random forest, naive Bayes, support vector machine and neural networks.

8. Analysis method according to one of Claims 1 to 7, **characterized in that** it is performed using an uneven number of classification models (24, 25, 26).

9. Analysis method according to one of Claims 1 to 8, **characterized in that** the category information (36) determined using one of the classification models (24, 25, 26) is checked manually and **in that** the confirmed category information (36) is used to generate a further learning data record (20) that is supplied to one or more of the model generators (21, 22, 23).

10. Analysis method according to one of Claims 1 to 9, **characterized in that** the classification models (24, 25, 26) distinguish between the categories "nacelle misalignment yes" and "nacelle misalignment no".

11. Analysis method according to Claim 10, **characterized in that** it is performed using data records (32) that represent part-load operation of the wind turbine (30, 31).

12. System for analysing an operating state of a wind turbine (30, 31), having a learning module for developing at least three different classification models (24, 25, 26) and having an operating module for analysing a data record (32) of the wind turbine (30, 31) using each of the classification models (24, 25, 26) and for assigning the wind turbine (30, 31) to a category (33, 34) on the basis of a majority criterion of the classification models (24, 25, 26), wherein the learning module comprises a first model generator (21) for generating the first classification model (24), a second model generator (22) for generating the second classification model (25) and a third model generator (23) for generating the third classification model (26), wherein the model generators (21, 22, 23) are designed to evaluate learning data in order to generate the classification models (24, 25, 26), wherein the learning data are respectively derived from a plurality of learning data records (20), wherein each learning data record (20) is associated with a wind turbine (14, 15), wherein each learning data record (20) comprises category information (36) about the wind turbine (14, 15), wherein each learning data record (20) contains a first parameter value (27, 28) and a second parameter value (29), which is dependent on the first parameter value (27, 28), and wherein the learning data are derived from the learning data records (20) on the basis of a classification criterion (37) that represents the dependency between the first parameter value (27, 28) and the second parameter value (29).

## Revendications

1. Procédé d'analyse d'un état de fonctionnement d'une installation éolienne (30, 31), dans lequel au moins trois modèles de classification différents (24, 25, 26) sont développés dans une phase d'apprentissage, et des données de travail (32) de l'installation éolienne (30, 31) sont analysées par chacun des modèles de classification (24, 25, 26) dans une phase de travail, et dans lequel l'installation éolienne (30, 31) est associée à une catégorie (33, 34) à l'aide d'un critère de majorité des modèles de classification (24, 25, 26), la phase d'apprentissage comprenant les étapes suivantes consistant à :
a. déterminer des premières données d'apprentissage pour un premier générateur de modèle (21) de sorte que le premier générateur de modèle (21) calcule un premier modèle de classification (24),
b. déterminer des deuxièmes données d'apprentissage pour un deuxième générateur de modèle (21) de sorte que le deuxième générateur de modèle (21) calcule un deuxième modèle de classification (25),
c. déterminer des troisièmes données d'apprentissage (20) pour un troisième générateur de modèle de sorte que le troisième générateur de modèle (23) calcule un troisième modèle de classification (26), dans lequel les données d'apprentissage sont déduites d'une pluralité d'ensembles de données d'apprentissage (20), chaque ensemble de données d'apprentissage (20) étant associé à une installation éolienne (14, 15), chaque ensemble de données d'apprentissage (20) comprenant une information de catégorie (36) concernant l'installation éolienne (14, 15), chaque ensemble de données d'apprentissage (20) comprenant une première valeur de paramètre (27, 28) et une deuxième valeur de paramètre (29) dépendant de la première valeur de paramètre (27, 28), et dans lequel la déduction des données d'apprentissage des ensembles de données d'apprentissage est effectuée à l'aide d'un critère de classification représentant la dépendance entre la première valeur de paramètre (27, 28) et la deuxième valeur de paramètre (29).

2. Procédé d'analyse selon la revendication 1, **caractérisé en ce que** la première valeur de paramètre (27, 28) et/ou la deuxième valeur de paramètre (29) correspondent à une valeur moyenne déterminée à partir d'une série chronologique.

3. Procédé d'analyse selon la revendication 1 ou 2, **caractérisé en ce que** chaque ensemble de données d'apprentissage (20) comprend une pluralité de premières valeurs de paramètre (27, 28) et/ou de deuxièmes valeurs de paramètre (29), de préférence une grande pluralité de premières valeurs de paramètre (27, 28) et/ou de deuxièmes valeurs de paramètre (29).

4. Procédé d'analyse selon l'une quelconque des revendications 1 à 3, **caractérisé en ce que** les générateurs de modèle (21, 22, 33) sont alimentés par des données d'apprentissage identiques.

5. Procédé d'analyse selon l'une quelconque des revendications 1 à 4, **caractérisé en ce que** les modèles de classification (24, 25, 26) sont aménagés de telle sorte qu'ils décident entre deux catégories (33, 34).

6. Procédé d'analyse selon l'une quelconque des revendications 1 à 5, **caractérisé en ce que** les générateurs de modèle (24, 25, 26) effectuent un procédé de reconnaissance de structure sur les données d'apprentissage.

7. Procédé d'analyse selon la revendication 6, **caractérisé en ce que** les générateurs de modèle reposent sur un ou plusieurs des algorithmes suivants : arbre de décision, forêt d'arbres décisionnels, bayésien naïf, machine à vecteurs de support et réseaux neuronaux.

8. Procédé d'analyse selon l'une quelconque des revendications 1 à 7, **caractérisé en ce qu'**il est effectué avec un nombre impair de modèles de classification (24, 25, 26).

9. Procédé d'analyse selon l'une quelconque des revendications 1 à 8, **caractérisé en ce que** l'information de catégorie (36) déterminée par l'un des modèles de classification (24, 25, 26) est vérifiée manuellement, et **en ce qu'**un ensemble de données d'apprentissage (20) supplémentaire est produit en utilisant l'information de catégorie (36) confirmée et est amené à un ou plusieurs des générateurs de modèle (21, 22, 23).

10. Procédé d'analyse selon l'une quelconque des revendications 1 à 9, **caractérisé en ce que** les modèles de classification (24, 25, 26) font la différence entre les catégories « mauvaise orientation de nacelle oui » et « mauvaise orientation de nacelle non ».

11. Procédé d'analyse selon la revendication 10, **caractérisé en ce qu'**il est effectué avec des ensembles de données (32) qui représentent un fonctionnement en charge partielle de l'installation éolienne (30, 31).

12. Système d'analyse d'un état de fonctionnement d'une installation éolienne (30, 31), comprenant un module d'apprentissage pour développer au moins trois modèles de classification différents (24, 25, 26) et avec un module de travail pour analyser un ensemble de données (32) de l'installation éolienne (30, 31) avec chacun des modèles de classification (24, 25, 26) et pour associer l'installation éolienne (30, 31) à une catégorie (33, 34) à l'aide d'un critère de majorité des modèles de classification (24, 25, 26), le module d'apprentissage comprenant un premier générateur de modèle (21) pour générer le premier modèle de classification (24), un deuxième générateur de modèle (22) pour générer le deuxième modèle de classification (25) et un troisième générateur de modèle (23) pour générer le troisième modèle de classification (26), les générateurs de modèle (21, 22, 23) étant conçus pour évaluer des données d'apprentissage afin de produire les modèles de classification (24, 25, 26), dans lequel les données d'apprentissage sont respectivement déduites d'une pluralité d'ensembles de données d'apprentissage (20), chaque ensemble de données d'apprentissage (20) étant associé à une installation éolienne (14, 15), chaque ensemble de données d'apprentissage (20) comprenant une information de catégorie (36) concernant l'installation éolienne (14, 15), chaque ensemble de données d'apprentissage (20) comprenant une première valeur de paramètre (27, 28) et une deuxième valeur de paramètre (29) dépendant de la première valeur de paramètre (27, 28), et dans lequel la déduction des données d'apprentissage des ensembles de données d'apprentissage (20) est effectuée à l'aide d'un critère de classification (37) représentant la dépendance entre la première valeur de paramètre (27, 28) et la deuxième valeur de paramètre (29).
